# EUROPEAN PATENT SPECIFICATION

(11) **EP 4 399 580 B1**
(45) Date of publication and mention of the grant of the patent: **29.04.2026**
(21) Application number: 22786096.2
(22) Date of filing: 30.08.2022
(51) Int. Cl.: G05B 23/02, G05B 19/418

(54) **A PRE-TRAINED RULE ENGINE AND METHOD TO PROVIDE ASSISTANCE TO CORRECT ABNORMAL EVENTS IN EQUIPMENT**
VORAB TRAINIERTE REGELMASCHINE UND VERFAHREN ZUR BEREITSTELLUNG VON UNTERSTÜTZUNG ZUR KORREKTUR ABNORMALER EREIGNISSE IN EINER AUSRÜSTUNG
MOTEUR DE RÈGLES PRÉ-ENTRAÎNÉ ET PROCÉDÉ POUR FOURNIR UNE ASSISTANCE POUR CORRIGER DES ÉVÉNEMENTS ANORMAUX DANS UN ÉQUIPEMENT

(30) Priority: 09.09.2021 IN 202141040927
(43) Date of publication of application: 17.07.2024
(73) Proprietor: ABB SCHWEIZ AG, 5400 Baden (CH)
(72) Inventor: AHMED, Farooq, Bangalore, Karnataka 560103 (IN); CS, Anandhan, Bangalore, Karnataka 560067 (IN); M, Rameshkumar, Bangalore, Karnataka 560049 (IN)
(74) Representative: Zimmermann & Partner Patentanwälte mbB
(86) International application number: PCT/IB2022/058112
(87) International publication number: WO 2023/037204

(56) References cited:
- EP-A1- 3 599 527
- EP-A2- 1 589 391
- DE-A1- 102014 103 440
- US-A1- 2005 197 803
- US-A1- 2019 129 395

## Description

### TECHNICAL FIELD

Embodiments of the disclosure generally relates to an industrial environment and, more particularly to, a pre-trained rule engine and a method for providing an assistance to correct abnormal event(s) encountered with an equipment associated with the industrial environment.

### BACKGROUND

Generally, industrial environment includes plurality of process plants such as chemical plant, petroleum plant, packaging plant and the like. Each of the process plant operations may be monitored and controlled by using Distributed Control System (DCS) or Programable Logic Control (PLC).

The DCS includes plurality of elements such as, sensors, controllers, and associated computers that are distributed throughout a plant. Each of these elements serve a unique purpose which may include data acquisition, process control, data storage, graphical display and so on. DCS application software is a special application program to monitor and control the field devices in plant using plant network. Each user is allowed to perform specific actions in each node depending on their roles to operate the plant. The monitoring and control of the plant is a complex task which involves the knowledge of various components and co-ordination between different functions such as engineering, operations, maintenance, process engineers and so on.

To monitor and control the plant, currently, standard faceplates with fixed objects are provided, which can represent a control loop, or process area or a unit of the plant. Users or operators are bound to use the fixed objects for monitoring and controlling activity, and/or launching different connected graphics libraries to control and monitor the plant. However, the challenge exists in what are the connected objects that needs to be launched for an encountered abnormal event. This is largely dependent on the knowledge of the operator. There can be many different approaches with which the process can be brought to normalcy. For example: document US 2005/197803 A1, describes a system which detects abnormal conditions associated with a process plant; document US 2019/129395 A1, describes a method of alarm notification includes providing data for an industrial process; and document EP 3 599 527 A1, describes a maintenance management system for assisting an operator to rectify a fault in an automation system in a plant. The challenge in such an abnormal event is to know which are the right steps and operations that need to be followed as well as how quickly the operator can perform these without wandering to any unwanted steps.

In view of the above, there is a need to build a pre-trained rule engine system to provide an assistance to the operators to quickly and efficiently correct various abnormal events of the plant.

The information disclosed in this background of the disclosure section is only for enhancement of understanding of the general background of the invention and should not be taken as an acknowledgment or any form of suggestion that this information forms the prior art already known to a person skilled in the art.

### SUMMARY

Additional features and advantages are realized through the techniques of the present disclosure. Other embodiments and aspects of the disclosure are described in detail herein and are considered a part of the claimed disclosure.

In an embodiment, the present disclosure relates a method for providing an assistance to correct at least one abnormal event encountered for at least one equipment in an industrial environment according to independent claim 1.

In an embodiment, the present disclosure relates to a pre-trained rule engine for providing an assistance to correct at least one abnormal event encountered for at least one equipment in an industrial environment according to independent claim 10.

The foregoing summary is illustrative only and is not intended to be in any way limiting. In addition to the illustrative aspects, embodiments, and features described above, further aspects, embodiments, and features may become apparent by reference to the drawings and the following detailed description.

### BRIEF DESCRIPTION OF THE ACCOMPANYING DRAWINGS

The novel features and characteristic of the disclosure are set forth in the appended claims. The disclosure itself, however, as well as a preferred mode of use, further objectives, and advantages thereof, may best be understood by reference to the following detailed description of an illustrative embodiment when read in conjunction with the accompanying drawings. The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. One or more embodiments are now described, by way of example only, with reference to the accompanying figures wherein like reference numerals represent like elements and in which:
**Figure 1** shows an exemplary shows an exemplary environment of a pre-trained rule engine for providing assistance to an operator to correct encountered abnormal event related to at least one equipment associated with an industrial environment, in accordance with some embodiments of the present disclosure;
**Figure 2** shows a detailed internal block diagram of a pre-trained rule engine for providing an assistance to an operator to correct encountered abnormal event, in accordance with some embodiments of the present disclosure;
**Figure 3** shows an exemplary embodiment of a pre-trained rule engine for providing an assistance to an operator to correct encountered abnormal event, in accordance with some embodiments of the present disclosure;
**Figure 4** shows a flowchart illustrating method for providing an assistance to an operator to correct encountered abnormal event associated with an industrial environment, in accordance with some embodiments of the present disclosure; and
**Figure 5** shows a general-purpose computer system implementing a pre-trained rule engine for providing an assistance to an operator to correct encountered abnormal event associated with an industrial environment, in accordance with embodiments of the present disclosure.

It should be appreciated by those skilled in the art that any block diagrams herein represent conceptual views of illustrative systems embodying the principles of the present subject matter. Similarly, it may be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and may be described in detail below. It should be understood, however that it is not intended to limit the disclosure to the particular forms disclosed, but on the contrary, the disclosure is to cover all modifications, equivalents, and alternative falling within the scope of the disclosure.

The terms "comprise," "includes" "comprising," "including" or any other variations thereof, are intended to cover a non-exclusive inclusion, such that a setup, device, or method that comprises a list of components or steps does not include only those components or steps but may include other components or steps not expressly listed or inherent to such setup, device, or method. In other words, one or more elements in a system or apparatus proceeded by "comprises... a" or "includes... a" does not, without more constraints, preclude the existence of other elements or additional elements in the system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The present disclosure relates to a pre-trained rule engine and it's method for providing an assistance to correct at least one abnormal event encountered for at least one equipment. Real-time information related to the at least one equipment is received, upon identification of the at least one abnormal event. At least one data is selected from historic data, expert opinion data and equipment standard data associated with the at least one equipment based on real-time state information related to the at least one equipment. The received real-time information is analyzed using the selected at least one data. An assistance is generated for correcting the at least one abnormal event based on the analysis. The assistance is provided to an operator for correcting the at least one abnormal event. By this, even less experienced operator can quickly correct the abnormal event without wandering to any unwanted steps.

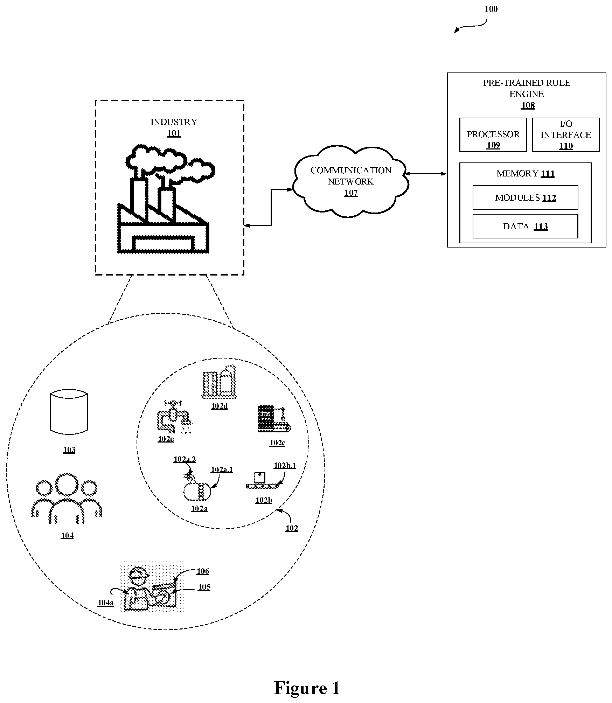

**Figure 1** shows an exemplary environment (100) of a pre-trained rule engine (108) for providing an assistance to an operator (104a) to correct encountered abnormal event related to at least one equipment (102a.1, 102b.1) associated with an industrial environment, in accordance with some embodiments of the present disclosure.

The exemplary environment (100) comprises an industry (101), a communication network (107) and a pre-trained rule engine (108). The industry (101) may be, but not limited to, manufacturing industry, chemical industry, packaging industry, food processing industry and so on. The industry (101) may include, but is not limited to, one or more plants (102), a database (103), one or more operators (104) and, at least one User Interface (UI) (105). The one or more plants (102) may include, but limited to, water storing plant (102a), object conveying plant (102b), object sorting plant (102c), chemical plant (102d), water purification plant (102e), and so on. Each of the one or more plants (102) may include at least one equipment (102a.1, 102b.1). The at least one equipment (102a.1, 102b.1) may include, but not limited to, water tank (102a.1) associated with water storing plant (102a), conveyor (102b.1) associated with object conveying plant (102b), and so on. The database (103) includes data related to the industry (101). Such data may be related to plant process, plant maintenance, plant operational, location and name of the one or more plants (102), information about equipment's associated with the plant, and so on. The one or more operators (104) may control the at least one equipment (102a.1, 102b.1) or the one or more plants (102) via the at least one UI (105). The one or more plants (102), the database (103), the at least one UI (105) are interconnected with each other via a plant network (not shown in figure). The plant process operations may be monitored and controlled using at least one of Distributed Control System (DCS) (106), Programable Logic Control (PLC) (not shown in figure) and Supervisory Control and Data Acquisition (SCADA) system (not shown in figure) and so on.

In an embodiment, the at least one UI (105) is coupled to the DCS system (106) associated with the industry (101). The operator (104a) may provide an input data by accessing DCS application installed in the DCS system (106) to monitor and/or control at least one of the at least one equipment (102a.1, 102b.1) and the one or more plants (102). The input data may include in form of instructions, commands, control actions and so on. The at least one UI (105) is configured to display output data which includes, but not limited to, real-time operational conditions of the one or more plants (102), abnormal event notifications, and so on. The UI (105) may include, but not limited to, Graphical User Interface (GUI), Human Machine Interface (HMI), Man Machine Interface (MMI), and so on. In an embodiment, the operator (104a) may be configured to provide the input data via the UI (105).

In an embodiment, the at least one equipment (102a.1, 102b.1) while performing one or more operations may encounter the at least one abnormal event. One or more sensors (not shown in figure) associated with the least one equipment (102a.1, 102b.1) may be configured to measure real-time information related to the at least one equipment (102a.1, 102b.1). In an embodiment, the one or more sensors may include, but are not limited to, at least one of pressure sensor, temperature sensor, position sensor, speed sensor, motion sensor, vibration sensor, acceleration sensor, and so on. Such one or more sensors may help in identifying the at least one abnormal event encountered for the at least one equipment. The one or more operations may include, but are not limited to, storing water, conveying the objects, and so on. In an embodiment, the real-time information may include, but not limited to, real-time state information associated with the at least one equipment (102a.1, 102b.1), name of the at least one equipment (102a.1, 102b.1), location of the at least one equipment (102a.1, 102b.1), plant name of the at least one equipment (102a.1, 102b.1), one or more alarm conditions, plant location of the at least one equipment (102a.1, 102b.1), sub-equipment operation status, categories of sub-equipment associated with the at least one equipment (102a.1, 102b.1) and so on.

In an example embodiment, the at least one equipment consider a water tank (102a.1), associated with the water storing plant (102), may be configured to store the water. The water tank (102a.1) may include control valve (102a.2) which may be configured to control the storage of the water. For example, when the water level in the water tank (102a.1) reaches to a maximum level, then the control valve (102a.2) may be configured to divert the water to another tank (not shown in figure). When the water tank (102a.1) overflows, then an abnormal event is triggered. The triggered abnormal event may be notified to the operator (104a) by displaying the abnormal event notification on the UI (105). The abnormal event notification may include at least one of text-based notification and/or sound-based notification. The one or more sensors are configured to measure the real-time information related to the abnormal event associated with the water tank (102a.1). The real-time information includes state information of the water tank (102a.1), location of the water tank (102a.1), name of the associated plant (i.e., water storage plant (102)), information of the control valve (102a.2), operation status of the control valve (102a.2), and so on. For example, location of the water tank (102a.1) may be located near unit-1 of the water storage plant (102). The real-time state information of the water tank (102a.1) may indicate current state of the water tank (102a.1). The real-time state information of the water tank (102a.1) may include, but not limited to, water overflowing, leakage in the water tank (102a.1), the control valve (102a.1) leakage, water pump motor failure, cracks in the control valve (102a.1), and so on. The measured real-time information related to the at least one equipment is provided to the pre-trained rule engine (108) via the communication network (107).

In an embodiment, the pre-trained rule engine (108) may communicate with the industry (101) via the communication network (107). In an embodiment, the communication network (107) may include, without limitation, a direct interconnection, Local Area Network (LAN), Wide Area Network (WAN), Controller Area Network (CAN), wireless network (e.g., using Wireless Application Protocol), the Internet, and the like.

The pre-trained rule engine (108) may be implemented in a variety of computing systems, such as a computer, a server, a network server, a cloud-based server, and the like. The pre-trained rule engine (108) may include at least one Central Processing Unit (also referred to as "CPU" or "processor") (109) and a memory (111) storing instructions executable by the processor (109). The processor (109) may comprise at least one data processor for executing program components to execute user requests or system-generated requests. The memory (111) is communicatively coupled to the processor (109). The memory (111) stores instructions, executable by the processor (109), which, on execution, may cause the pre-trained rule engine (108) to provide the assistance to the operator (104a) to correct the encountered at least one abnormal event associated with the at least one equipment (102a.1, 102b.1). In an embodiment, the memory (111) may include modules (112) and data (113). The modules (112) may be configured to perform the steps of the present disclosure using the data (113), to provide the assistance to the operator (104a). In an embodiment, each of the modules (112) may be a hardware unit which may be outside the memory (111) and coupled with the pre-trained rule engine (108). As used herein, the term modules (112) refer to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The modules (112) when configured with the described functionality defined in the present disclosure will result in a novel hardware. The pre-trained rule engine (108) further comprises an Input/ Output (I/O) interface (110). The I/O interface (110) is coupled with the processor (108) through which an input signal or/and an output signal is communicated. The input signal and the output signal may represent data received by the pre-trained rule engine (108) and data transmitted by the pre-trained rule engine (108), respectively. In an embodiment, the pre-trained rule engine (108) may be configured to receive and transmit data via the I/O interface (110). The received data may comprise, but is not limited to, the real-time information related to the encountered at least one abnormal event associated with the at least one equipment (102a.1, 102b.1) in the industrial environment. The transmitted data may include, but is not limited to, the assistance for correcting the encountered least one abnormal event encountered adaptive torque. The assistance may be provided to the operator (104a) via the UI (105).

In an embodiment, pre-trained rule engine (108) may either be integral part of the industry (101) or may be a cloud-based system. In an embodiment, the pre-trained rule engine (108) may be associated with one or more industries. The pre-trained rule engine (108) may be configured to communicate with each of the one or more industries to provide the assistance to the operator (104a) for correcting the encountered abnormal event.

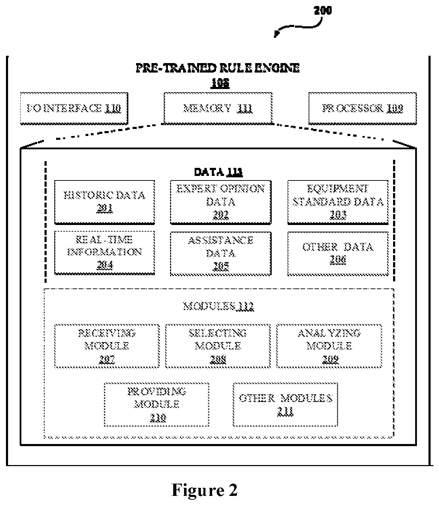

**Figure 2** shows a detailed internal block diagram of the pre-trained rule engine (108) for providing the assistance to the operator (104a) to correct encountered abnormal event, in accordance with some embodiments of the present disclosure.

In some implementations, the pre-trained rule engine (108) may include the memory (111) storing instructions, executable by the processor (109), which, on execution, may cause the pre-trained rule engine (108) to provide the assistance to the operator (104a) to correct the encountered at least one abnormal event associated with the at least one equipment (102a.1, 102b.1). In an embodiment, the memory (111) may include data (113) and one or more modules (112). In an embodiment, each of the one or more modules (112) may be a hardware unit which may be outside the memory (108) and coupled with the pre-trained rule engine (108).

In one implementation, the modules (112) may include, for example, a receiving module (207), a selecting module (208), an analyzing module (209), a generating module (210), providing module (211) and other modules (212). It may be appreciated that such modules (112) may be represented as a single module or a combination of different modules.

In an embodiment, the data (113) may include for example, historic data (201), expert opinion data (202), equipment standard data (203), real-time information (204), assistance data (205) (also referred to as assistance (205)) and other data (206).

In an embodiment, the historic data (201) may include plurality of operator actions performed by the one or more operators (104) to correct each of one or more abnormal events previously occurred for the at least one equipment (102a.1, 102b.1). In an example scenario, when the water tank (102a.1) overflows, then the abnormal event may be triggered. Then operator 1 may correct the abnormal event by performing five actions. After few days, when the water tank (102a.1) once again overflows, then operator 2 may correct the abnormal event by performing two actions. Later after few days, when the water tank over again overflows, then operator 3 may correct the abnormal event by performing three actions. The operator 1, the operator 2 and the operator 3 performed actions to correct each of the water tank (102a.1) overflow abnormal events may be recorded and stored in the memory (111) of the pre-trained rule engine (105). The Table.1 shows the plurality actions performed by the operator.1, the operator.2, the operator.3 for correcting the water tank (102a.1) overflow abnormal event. The historic data (201) may be used by the modules (112) when again similar abnormal event i.e., water tank (201a.1) overflow triggered for the at least one equipment (i.e., the water tank (102a.1) for providing the assistance (205) to the operator (104a) to correct the abnormal event.

**Table.1**

| Operator.1 | Operator.2 | Operator.3 |
|---|---|---|
| 1. Turn off the water supply. | 1. Replace valve seat of the control valve (102a.2). | 1. Replace valve seat of the control valve (102a.2). |
| 2.Adjust the high-water pressure. | | |
| | 2. Add overflow pipe to outlet to divert excess water. | 2. Replace the water pump motor. |
| 3. Replace valve seat of the control valve (102a.2). | | |
| | | 3. Add overflow pipe to outlet to divert excess water. |
| 4. Add overflow pipe to outlet to divert excess water. | | |
| 5. Turn on the water supply. | | |

In an embodiment, the expert opinion data (202) may include one or more industrial expert opinions associated with correcting each of one or more abnormal events encountered for the at least one equipment (102a.1, 102b.1). Industrial expert opinion indicates one or more actions taken by respective domain expert to correct each of one or more abnormal events encountered for the at least one equipment (102a.1, 102b.1). The domain expert may be one who gained a great experience and knowledge by correcting each of the one or more abnormal events encountered for the at least one equipment (102a.1, 102b.1).

In an embodiment, the equipment standard data (203) may include Original Equipment Manufacturer (OEM) data specification received from manufacturer of the at least one equipment. In an example scenario, the water tank (102a.1) may be leaking due to improper closing position of control knob of the control valve (102a.2). The control valve (102a.2) position may be corrected using OEM data specification. The OEM data specification for control knob may indicate range value between 70° to 85° for correcting the closing position.

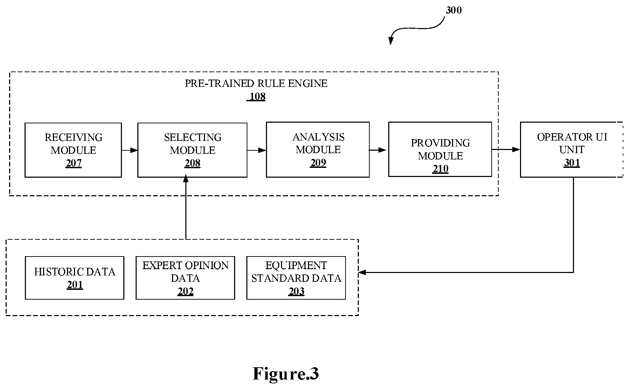

**Figure 3** shows an exemplary embodiment of the pre-trained rule engine (109) for providing the assistance (205) to the operator (104a) to correct encountered abnormal event, in accordance with some embodiments of the present disclosure.

In an embodiment, the receiving module (207) is configured to receive the real-time information (204) related to the at least one equipment (102a.1, 102b.2). The real-time information (204) may be received upon identifying the encountered at least one abnormal event. The real-time information may include, but not limited to, real-time state information associated with the at least one equipment (102a.1, 102b.1), name of the at least one equipment (102a.1, 102b.1), location of the at least one equipment (102a.1, 102b.1), plant name of the at least one equipment (102a.1, 102b.1), plant location of the at least one equipment (102a.1, 102b.1), sub-equipment operation status, categories of sub-equipment associated with the at least one equipment (102a.1, 102b.1), one or more alarm conditions, and so on. In an example embodiment, the abnormal event may be encountered for the water tank (102a.1) due to water overflowing. The encountered event may be identified using the one or more sensors associated with the water tank (102a.1).

In an embodiment, the selecting module (208) is configured to select the at least one data from the historic data (201), the expert opinion data (202) and the equipment standard data (203) associated with the at least one equipment (102a.1, 201.b). The at least one data may be selected based on the real-time state information related to the at least one equipment (102a.1, 201.b). The selecting module (208) is configured to identify priority factor related to the at least one abnormal event encountered for the at least one equipment based on the real-time state information. Based on the identified priority factor, the selecting module (208) selects the at least one data from the historic data (201), the expert opinion data (202) and the equipment standard data (203). In an embodiment, the selecting module (208) may select single data, or a combination of different data based on the identified priority factor.

In an embodiment, the operator (104a) may define the priority factor for each of the one or more abnormal events or for each of one or more alarms associated with the at least one equipment (102a.1). The priority factor may be defined for instance during installation or maintenance process of the at least one equipment (102a.1). The priority factor may be defined based on severity condition related to the each of one or more abnormal events. In an example embodiment, the severity condition may be classified as critical, high, medium, and low. Critical abnormal event may be defined with priority 1, high abnormal event may be defined with priority 2, medium abnormal event may be defined with priority 3 and so on.

In an embodiment, based on the real-time state information of the encountered at least one abnormal event related to the at least one equipment, the defined corresponding priority factor may be identified by the selecting module (208). The selecting module (208) may select the at least one data from the historic data (201), the expert opinion data (202) and the equipment standard data (203) associated with the at least one equipment (102a.1, 201.b) based on the identified priority factor. Consider an example case.1 where the identified priority factor is 1, then the selecting module (208) may select all three data such as the historic data (201), the expert opinion data (202) and the equipment standard data (203). Consider another example case.2 where the identified priority factor is 2, then the selecting module (208) may select the expert opinion data (202) and the equipment standard data (203). Consider another example case.3 where the identified priority factor is 3, then the selecting module (208) may select only the expert opinion data (202).

In the example case.1: when the historic data (201), the expert opinion data (202) and the equipment standard data (203) is selected by the selecting module (209), the analyzing module (209) is configured to analyze the received real-time information using the historic data (201), the expert opinion data (202) and the equipment standard data (203), to generate the assistance (205) for correcting the at least one abnormal event.

In an example scenario, the received real-time information may be related to the water tank (102a.1) overflow abnormal event. The analysis module (209) analyses the received information related to the water tank (102a.1) overflow abnormal event using the selected historic data (209), the expert opinion data (202) and the equipment standard data (203) related to treating the water tank (102a.1) overflow abnormal event, to generate the assistance (205) for correcting the water tank (102a.1) overflow abnormal event. The historic data (209), the expert opinion data (202) and the equipment standard data (203) for treating the water tank (102a.1) overflow abnormal event is provided in Table.2.

**Table.2**

| |
|---|
| i) The historic data (209) for treating the water tank (102a.1) overflow: |
| Equipment: water tank (102a.1) |
| Past action taken: 1) replace valve seat of the control valve (102a.2) and Add overflow pipe to outlet to divert excess water |
| ii) Expert opinion data (202) for treating the water tank (102a.1) overflow: |
| Equipment: water tank (102a.1) |
| Past action taken1) replace valve seat of the control valve (102a.2) and Add overflow pipe to outlet to divert excess water |
| 2) High water pressure is adjusted. |
| iii) Equipment standard data (203) for treating the water tank (102a.1) overflow: |
| Equipment: water tank (102a.1) |
| Control valve normal operating range: 70⁰ to 85⁰ |

In example case.2: when the historic data (201) is selected by the selecting module (209). Then the analyzing module (209) is configured to check for previous occurrence of the at least one abnormal event to be greater than a predefined number of times in the historic data (201). The predefined number may indicate integer value such as 1, 2, 3, 4, 5, and so on. The analyzing module (209) is configured to identify one or more operator actions performed for the previously occurrences of the at least one abnormal event, to generate the assistance (205) for correcting the at least one abnormal event. In an embodiment, the analysis module (209) may use at least one of process graphics and control logic to identify one or more operator actions related to the specific encountered at least one abnormal event. In an embodiment, when the previous occurrence of the at least one abnormal event is less than or equal to a predefined number of times in the historic data (201), then the pre-trained rule engine (108) may record real-time operator actions for correcting the encountered at least one abnormal event for the at least one equipment (102a.1). The recorded real-time operator actions may be stored in the memory (111).

In an example scenario, the received real-time information may be related to the water tank (102a.1) overflow abnormal event. When the historic data (201) is selected, then the analyzing module (209) checks whether the water tank (102a.1) overflow abnormal event previously occurred more than three times or not in the historic data (201). If the water tank (102a.1) abnormal event corrected previously more than three times, then analysis module (209) identifies one or more operator actions performed for the previously occurrences of water tank (102a.1) overflow abnormal event, to generate the assistance (205) for correcting the at least one abnormal event. In an embodiment, if the water tank (102a.1) overflow abnormal event not corrected previously more than three times, then the pre-trained rule engine (108) may record real-time operator actions for correcting the encountered water tank (102a.1) overflow abnormal event. The recorded real-time operator actions may be stored in the memory (111).

In an embodiment, the providing module (210) is configured to provide the assistance (205) to the operator (104a) on an operator UI unit (301). The assistance (205) comprises at least one of text-based assistance, value-based assistance comprising face plates and graphical elements, graph-based assistance, notification-based assistance, email-based assistance, and message-based assistance. In an embodiment, the text-based assistance, notification-based assistance, email-based assistance, and message-based assistance may indicate plurality of sequential instructions in the form of text to be followed by the operator (104a) to correct the at least one abnormal event. In an example scenario, consider the water tank (102a.1) overflow abnormal event may be encountered. The pre-trained rule engine (108) may provide the at least recommendation in the form of text to the operator (104a). The text-based recommendation to correct the encountered water tank (102a.1) overflow abnormal event may be provided as below:
Instruction.1: Replace valve seat of the control valve (102a.2); and
Instruction 2: Add overflow pipe to outlet to divert excess water

The value-based assistance may indicate recommended operating action range values. In an embodiment, the value-based assistance provides recommended operating range in form of numbers. For example, to correct the water tank (102a.1) overflow abnormal event, the pre-trained rule engine (108) may provide the operating range as provided below:
Instruction 1: Change control valve (102a.2) normal operating temperature range to be between 70° to 85°.

The graph-based assistance may indicate the at least one recommendation in form of a pictorial representation which may be in the form of a graph plotting with recommended values.

In an embodiment, upon providing the assistance (205) to the operator (104a), the operator (104a) may perform the real-time actions via the operator UI unit (301) to correct the encountered abnormal event. The operator (104a) real-time actions may be recorded and fed back to the pre-trained rule engine (108) to fine-tune the pre-trained rule engine. This fine tuning increases the accuracy of the pre-trained rule engine (108). In an embodiment, the pre-trained rule engine (108) may be tuned using at least one of Machine Learning Algorithm, Artificial Intelligence (AI), and Neural networks.

In an embodiment, the other data (206) may store data, including temporary data, temporary files, and temporary actions generated by the modules (112) for performing the various functions of the pre-trained rule-engine (109). In an embodiment, the other modules (211) may be configured to perform various miscellaneous functionalities of the pre-trained rule engine (108).

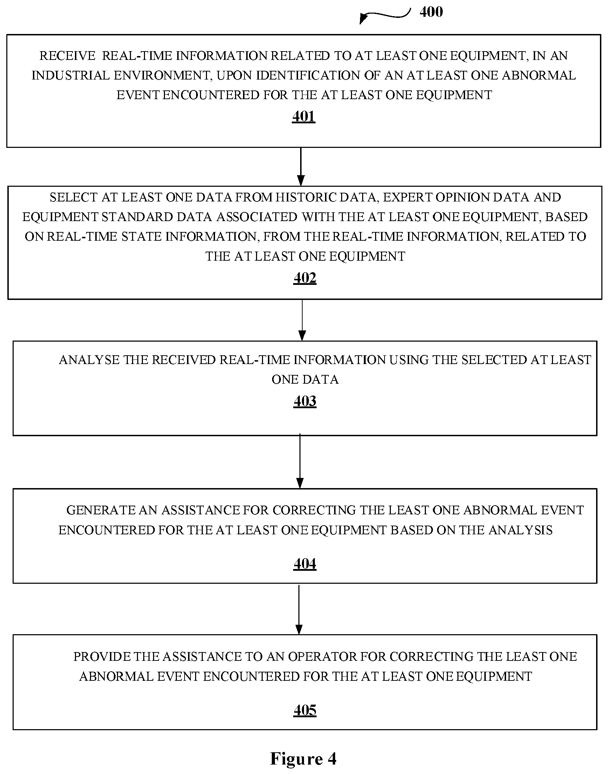

**Figure 4** shows a flowchart illustrating method for providing the assistance to the operator (104a) to correct encountered abnormal event associated with an industrial environment, in accordance with some embodiments of the present disclosure. The method steps are performed using the pre-trained rule engine (108). The order in which the method (400) may be described is not intended to be construed as a limitation, and any number of the described method blocks may be combined in any order to implement the method. Additionally, individual blocks may be deleted from the methods without departing from the scope of the subject matter described herein. Furthermore, the method may be implemented in any suitable hardware, software, firmware, or combination thereof.

At the step 401, the receiving module (207) receives the real-time information related to the at least one equipment (102a.1, 102b.2). The real-time information may be received upon identifying the encountered at least one abnormal event. The real-time information may include, but not limited to, real-time state information associated with the at least one equipment (102a.1, 102b.1), name of the at least one equipment (102a.1, 102b.1), location of the at least one equipment (102a.1, 102b.1), plant name of the at least one equipment (102a.1, 102b.1), plant location of the at least one equipment (102a.1, 102b.1), sub-equipment operation status, categories of sub-equipment associated with the at least one equipment (102a.1, 102b.1), one or more alarm conditions, and so on.

At the step 402, the selecting module (208) selects the at least one data from the historic data (201), the expert opinion data (202) and the equipment standard data (203) associated with the at least one equipment (102a.1, 201.b). Based on the received real-time state information, the priority factor of the at least one equipment may be identified. The at least one data may be selected based on the identified priority factor associated with the at least one equipment (102a.1, 201.b). In an embodiment, the selecting module (208) may select single data, or a combination of different data based on the identified priority factor.

At the steps 403 and 404, the analyzing module (209) analyses the received real-time information using the selected at least one data. In an embodiment, if the selected data is only historic data (201), then analyzing module (209) checks for previous occurrence of the at least one abnormal event to be greater than the predefined number of times in the historic data (201). The predefined number may indicate integer value. The analyzing module (209) identifies one or more operator actions performed for the previously occurrences of the at least one abnormal event, to generate the assistance for correcting the at least one abnormal event. In an embodiment, when the previous occurrence of the at least one abnormal event less than or equal to a predefined number of times in the historic data (201), then the pre-trained rule engine (108) may record real-time operator actions for correcting the encountered at least one abnormal event for the at least one equipment (102a.1). The recorded real-time operator actions may be stored in the memory (111).

At the step 405, the providing module (210) provides the assistance to the operator (104a) to correct the encountered at least one abnormal event related to the at least one equipment (102a.1, 102b.1). The assistance comprises at least one of text-based assistance, value-based assistance comprising face plates and graphical elements, graph-based assistance, notification-based assistance, email-based assistance, and message-based assistance. Text-based assistance may indicate plurality of sequential steps to be followed by the operator (104a) to correct the at least one abnormal event. The value-based assistance may indicate recommended operating action range values. The assistance may be provided to the operator (104a) in the form of notification, email, message, and so on.

### ADVANTAGES:

The present invention provides a pre-trained rule engine for providing assistance to the operator for correcting encountered at least one abnormal event associated with the industrial environment. By providing assistance, even less experienced operator can quickly correct the abnormal event without wandering to any unwanted steps. This avoids serious failure of the equipment. Time of the operator is also saved. The present invention facilitates the operators to customize the graphics, faceplate, graphic elements (symbols) at runtime without experts support for performing the changes.

### COMPUTER SYSTEM

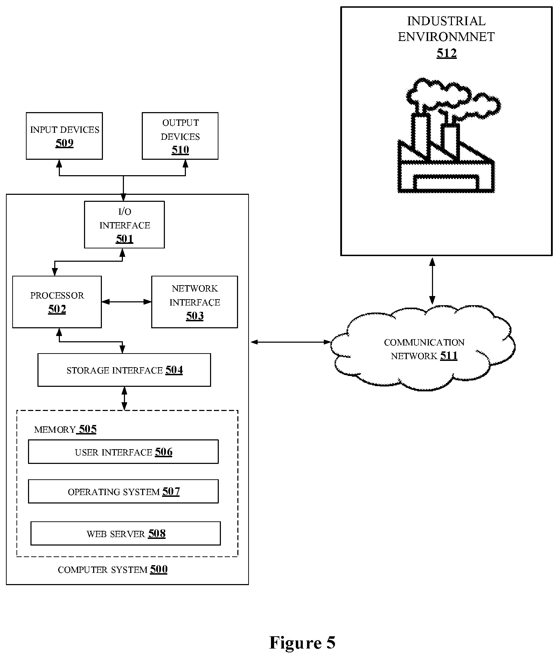

**Figure. 5** shows a general-purpose computer system implementing the pre-trained rule engine for providing an assistance to the operator to correct encountered abnormal event associated with an industrial environment, in accordance with embodiments of the present disclosure. In an embodiment, the computer system (500) may be used to implement the method of providing assistance to the operator associated with an industrial environment (512) to correct the at last one abnormal event. The computer system (500) may comprise a central processing unit ("CPU" or "processor") (502). The processor (502) may comprise at least one data processor for executing program components for dynamic resource allocation at run time. The processor (502) may include specialized processing units such as integrated system (bus) controllers, memory management control units, floating point units, graphics processing units, digital signal processing units, etc.

The processor (502) may be disposed in communication with one or more input/output (I/O) devices (not shown) via I/O interface (501). The I/O interface (501) may employ communication protocols/methods such as, without limitation, audio, analog, digital, monoaural, RCA, stereo, IEEE-(1394), serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface (501), the computer system (500) may communicate with one or more I/O devices. For example, the input device (510) may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device (511) may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system (500) is connected to the service operator through a communication network (511). The processor (502) may be disposed in communication with the communication network (511) via a network interface (503). The network interface (503) may communicate with the communication network (511). The network interface (503) may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network (511) may include, without limitation, a direct interconnection, e-commerce network, a peer to peer (P2P) network, local area network (LAN), wide area network (WAN), wireless network (e.g., using Wireless Application Protocol), the Internet, Wi-Fi, etc. Using the network interface (503) and the communication network (511), the computer system (500) may communicate with the one or more service operators.

In some embodiments, the processor (502) may be disposed in communication with a memory (505) (e.g., RAM, ROM, etc. not shown in Figure 5 via a storage interface (504). The storage interface (504) may connect to memory (505) including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory (505) may store a collection of program or database components, including, without limitation, user interface (506), an operating system (507), web server (508) etc. In some embodiments, computer system (500) may store user/application data (506), such as the data, variables, records, etc. as described in this disclosure. Such databases may be implemented as fault-tolerant, relational, scalable, secure databases such as Oracle or Sybase.

The operating system (507) may facilitate resource management and operation of the computer system (500). Examples of operating systems include, without limitation, APPLE^{®} MACINTOSH^{®} OS X^{®}, UNIX^{®}, UNIX-like system distributions (E.G., BERKELEY SOFTWARE DISTRIBUTION^{®} (BSD), FREEBSD^{®}, NETBSD^{®}, OPENBSD, etc.), LINUX^{®} DISTRIBUTIONS (E.G., RED HAT^{®}, UBUNTU^{®}, KUBUNTU^{®}, etc.), IBM^{®}OS/2^{®}, MICROSOFT^{®} WINDOWS^{®} (XP^{®}, VISTA^{®}/7/8, 10 etc.), APPLE^{®} IOS^{®}, GOOGLETM ANDROIDTM, BLACKBERRY^{®} OS, or the like.

In some embodiments, the computer system (500) may implement a web browser (not shown in Figure) stored program component. The web browser may be a hypertext viewing application, such as MICROSOFT^{®} INTERNET EXPLORER^{®}, GOOGLETM CHROMETM, MOZILLA^{®} FIREFOX^{®}, APPLE^{®} SAFARI^{®}, etc. Secure web browsing may be provided using Secure Hypertext Transport Protocol (HTTPS), Secure Sockets Layer (SSL), Transport Layer Security (TLS), etc. Web browsers (508) may utilize facilities such as AJAX, DHTML, ADOBE^{®} FLASH^{®}, JAVASCRIPT^{®}, JAVA^{®}, Application Programming Interfaces (APIs), etc. In some embodiments, the computer system (500) may implement a mail server stored program component. The mail server may be an Internet mail server such as Microsoft Exchange, or the like. The mail server may utilize facilities such as Active Server Pages (ASP), ACTIVEX^{®}, ANSI^{®} C++/C#, MICROSOFT^{®}, .NET, CGI SCRIPTS, JAVA^{®}, JAVASCRIPT^{®}, PERL^{®}, PHP, PYTHON^{®}, WEBOBJECTS^{®}, etc. The mail server may utilize communication protocols such as Internet Message Access Protocol (IMAP), Messaging Application Programming Interface (MAPI), MICROSOFT^{®} Exchange, Post Office Protocol (POP), Simple Mail Transfer Protocol (SMTP), or the like. In some embodiments, the computer system (500) may implement a mail client stored program component. The mail client may be a mail viewing application, such as APPLE^{®} MAIL, MICROSOFT^{®} ENTOURAGE^{®}, MICROSOFT^{®} OUTLOOK^{®}, MOZILLA^{®} THUNDERBIRD^{®}, etc.

Furthermore, one or more computer-readable storage media may be utilized in implementing embodiments consistent with the present invention. A computer-readable storage medium refers to any type of physical memory (505) on which information or data readable by a processor (502) may be stored. Thus, a computer-readable storage medium may store instructions for execution by one or more processors, including instructions for causing the processors to perform steps or stages consistent with the embodiments described herein. The term "computer-readable medium" should be understood to include tangible items and exclude carrier waves and transient signals, i.e., non-transitory. Examples include Random Access memory (RAM), Read-Only memory (ROM), volatile memory, non-volatile memory, hard drives, Compact Disc (CD) ROMs, Digital Video Disc (DVDs), flash drives, disks, and any other known physical storage media.

In an embodiment, the computer system (500) may receive the real-time information related to at least one equipment associated with the industrial environment (512) through the communication network (511).

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it may be readily apparent that more than one device/article (whether or not they cooperate) may be used in place of a single device/article. Similarly, where more than one device or article is described herein (whether or not they cooperate), it may be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Fig. 4 show certain events occurring in a certain order. In alternative embodiments, certain operations may be performed in a different order, modified, or removed. Moreover, steps may be added to the above-described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

### REFERRAL NUMERALS:

| **Reference number** | **Description** |
|---|---|
| 100 | Exemplary environment |
| 101 | Industry |
| 102 | One or more plants |
| 102a | Water storing plant |
| 102b | Object conveying plant |
| 102c | Object sorting plant |
| 102d | Chemical plant |
| 102e | Water purification plant |
| 102a.1, 102b.1 | At least one equipment |
| 103 | Database |
| 104 | One or more operators |
| 104a | An operator |
| 105 | User Interface |
| 106 | Distributed Control System (DCS) |
| 107 | Communication network |
| 108 | Pre-trained rule engine |
| 109 | Processor |
| 110 | I/O interface |
| 111 | Memory |
| 112 | Modules |
| 113 | Data |
| 201 | Historic data |
| 202 | Expert opinion data |
| 203 | Equipment data |
| 204 | Real-time information |
| 205 | Assistance data |
| 206 | Other data |
| 207 | Receiving module |
| 208 | Selecting module |
| 209 | Analyzing module |
| 210 | Providing module |
| 211 | Other modules |
| 301 | Operator UI unit |
| 500 | Computer system |
| 501 | I/O interface |
| 502 | Processor |
| 503 | Network interface |
| 504 | Storage interface |
| 505 | Memory |
| 506 | User interface |
| 507 | Operating system |
| 508 | Web Server |
| 509 | Input Device |
| 510 | Output Device |
| 511 | Communication network |
| 512 | Industry |

## Claims

1. A method for providing an assistance to correct at least one abnormal event encountered for at least one equipment (102a.1, 102b.1) in an industrial environment, the method comprising:
receiving, by a pre-trained rule engine (108), real-time information related to at least one equipment (102a.1, 102b.1), in an industrial environment, upon identification of an at least one abnormal event encountered for the at least one equipment (102a.1, 102b.1);
selecting, by the pre-trained rule engine (108), at least one data from historic data (201), expert opinion data (202) and equipment standard data (203) associated with the at least one equipment (102a.1, 102b.1), based on real-time state information, from the real-time information, related to the at least one equipment (102a.1, 102b.1),
wherein selecting the at least one data from the historic data (201), the expert opinion data (202) and the equipment standard data (203) comprises:
identifying, by the pre-trained rule engine, a priority factor related to the at least one abnormal event encountered for the at least one equipment (102a.1, 102b.1) based on the real-time state information; and
selecting, by the pre-trained rule engine, the at least one data from the historic data (201), the expert opinion data (202) and the equipment standard data (203) based on the identified priority factor;
analyzing, by the pre-trained rule engine (108), the received real-time information using the selected at least one data;
generating, by the pre-trained rule engine (108), an assistance for correcting the at least one abnormal event encountered for the at least one equipment (102a.1, 102b.1) based on the analysis; and
providing, by the pre-trained rule engine (108), the assistance to an operator (104a) for correcting the at least one abnormal event encountered for the at least one equipment (102a.1, 102b.1).

2. The method as claimed in claim 1, wherein the real-time information indicates at least one of current operation status of the at least one equipment (102a.1, 102b.1), one or more categories of sub-equipment associated with the at least one equipment (102a.1, 102b.1), real-time state information related to the at least one equipment (102a.1, 102b.1), one or more alarm conditions, and one or more sub-equipment operation status.

3. The method as claimed in any of the preceding claims, wherein the pre-trained rule engine (108) is trained using the historic data (201), the expert opinion data (202) and the equipment standard data.

4. The method as claimed in any of the preceding claims, wherein the historic data (201) comprises plurality of operator actions performed by one or more operators (104) to correct each of one or more abnormal events previously occurred for the at least one equipment (102a.1, 102b.1).

5. The method as claimed in any of the preceding claims, wherein the expert opinion data (202) comprises one or more industrial expert opinions associated with correcting each of one or more abnormal events encountered for the at least one equipment (102a.1, 102b.1).

6. The method as claimed in in any of the preceding claims, wherein the equipment standard data (203) comprises Original Equipment Manufacturer (OEM) data specification received from manufacturer of the at least one equipment (102a.1, 102b.1).

7. The method as claimed in any of the preceding claims, wherein the assistance comprises at least one of text-based assistance, value-based assistance comprising face plates and graphical elements, graph-based assistance, notification-based assistance, email-based assistance, and message-based assistance.

8. The method as claimed in any of the preceding claims, wherein analyzing the received real-time information using the historic data (201) comprises:
checking for previous occurrence of the at least one abnormal event to be greater than a predefined number of times in the historic data (201); and
identifying one or more operator actions performed for the previously occurrences of the at least one abnormal event, to generate the assistance for correcting the at least one abnormal event.

9. The method as claimed in any of the preceding claims, further comprises fine-tuning the pre-trained rule engine (108) based on real-time operator actions performed on the at least one equipment (102a.1, 102b.1) to correct the at least one abnormal event.

10. A pre-trained rule engine (108) for providing an assistance to correct at least one abnormal event encountered for at least one equipment (102a.1, 102b.1) in an industrial environment, the pre-trained rule engine (108) comprising:
a processor (109); and
a memory (111) communicatively coupled to the processor (109), wherein the memory (111) stores processor-executable instructions, which, on execution, cause the processor (109) to perform the method of any of claims 1 to 9.

## Patentansprüche

1. Verfahren zum Bereitstellen von Unterstützung zum Korrigieren mindestens eines anomalen Ereignisses, das für mindestens eine Ausrüstung (102a.1, 102b.1) in einer industriellen Umgebung festgestellt wird, wobei das Verfahren Folgendes umfasst:
Empfangen, durch eine vortrainierte Regel-Engine (108), von Echtzeitinformationen in Bezug auf mindestens eine Ausrüstung (102a.1, 102b.1) in einer industriellen Umgebung bei Identifizierung eines mindestens einen anomalen Ereignisses, das für die mindestens eine Ausrüstung (102a.1, 102b.1) festgestellt wird;
Auswählen, durch die vortrainierte Regel-Engine (108), mindestens eines Datenelements aus historischen Daten (201), Expertenmeinungsdaten (202) und Ausrüstungsstandarddaten (203), die mit der mindestens einen Ausrüstung (102a.1, 102b.1) verknüpft sind, basierend auf Echtzeitzustandsinformationen, aus den Echtzeitinformationen, die sich auf die mindestens eine Ausrüstung (102a.1, 102b.1) beziehen,
wobei das Auswählen des mindestens einen Datenelements aus den historischen Daten (201), den Expertenmeinungsdaten (202) und den Ausrüstungsstandarddaten (203) Folgendes umfasst:
Identifizieren, durch die vortrainierte Regel-Engine, eines Prioritätsfaktors in Bezug auf das mindestens eine anomale Ereignis, das für die mindestens eine Ausrüstung (102a.1, 102b.1) festgestellt wird, basierend auf den Echtzeitzustandsinformationen; und
Auswählen, durch die vortrainierte Regel-Engine, des mindestens einen Datenelements aus den historischen Daten (201), den Expertenmeinungsdaten (202) und den Ausrüstungsstandarddaten (203) basierend auf dem identifizierten Prioritätsfaktor;
Analysieren, durch die vortrainierte Regel-Engine (108), der empfangenen Echtzeitinformationen unter Verwendung des ausgewählten mindestens einen Datenelements;
Erzeugen, durch die vortrainierte Regel-Engine (108), von Unterstützung zum Korrigieren des mindestens einen anomalen Ereignisses, das für die mindestens eine Ausrüstung (102a.1, 102b.1) festgestellt wird, basierend auf der Analyse; und
Bereitstellen, durch die vortrainierte Regel-Engine (108), der Unterstützung für einen Bediener (104a) zum Korrigieren des mindestens einen anomalen Ereignisses, das für die mindestens eine Ausrüstung (102a.1, 102b.1) festgestellt wird.

2. Verfahren nach Anspruch 1, wobei die Echtzeitinformationen mindestens eines von aktuellem Betriebsstatus der mindestens einen Ausrüstung (102a.1, 102b.1), einer oder mehreren Teilausrüstungskategorien, die mit der mindestens einen Ausrüstung (102a.1, 102b.1) verknüpft sind, Echtzeitzustandsinformationen, die mit der mindestens einen Ausrüstung (102a.1, 102b.1) verknüpft sind, und einer oder mehreren Alarmzustandsinformationen anzeigen.

3. Verfahren nach einem der vorhergehenden Ansprüche, wobei die vortrainierte Regel-Engine (108) unter Verwendung der historischen Daten (201), der Expertenmeinungsdaten (202) und der Ausrüstungsstandarddaten trainiert wird.

4. Verfahren nach einem der vorhergehenden Ansprüche, wobei die historischen Daten (201) mehrere Bedieneraktionen umfassen, die durch einen oder mehrere Bediener (104) durchgeführt wurden, um jedes von einem oder mehreren anomalen Ereignissen zu korrigieren, die zuvor für die mindestens eine Ausrüstung (102a.1, 102b.1) aufgetreten sind.

5. Verfahren nach einem der vorhergehenden Ansprüche, wobei die Expertenmeinungsdaten (202) eine oder mehrere Branchenexpertenmeinungen umfassen, die mit dem Korrigieren jedes von einem oder mehreren anomalen Ereignissen verknüpft sind, die für die mindestens eine Ausrüstung (102a.1, 102b.1) festgestellt werden.

6. Verfahren nach einem der vorhergehenden Ansprüche, wobei die Ausrüstungsstandarddaten (203) eine Originalgerätehersteller(OEM)-Datenspezifikation
umfassen, die von einem Hersteller der mindestens einen Ausrüstung (102a.1, 102b.1) erhalten wurde.

7. Verfahren nach einem der vorhergehenden Ansprüche, wobei die Unterstützung eine textbasierte Unterstützung und/oder eine wertbasierte Unterstützung, die Faceplates und grafische Elemente umfasst, und/oder eine graphenbasierte Unterstützung und/oder eine benachrichtigungsbasierte Unterstützung und/oder eine E-Mail-basierte Unterstützung und/oder eine nachrichtenbasierte Unterstützung umfasst.

8. Verfahren nach einem der vorhergehenden Ansprüche, wobei das Analysieren der empfangenen Echtzeitinformationen unter Verwendung der historischen Daten (201) Folgendes umfasst:
Prüfen, ob frühere Vorkommnisse des mindestens einen anomalen Ereignisses größer als eine vordefinierte Anzahl von Malen in den historischen Daten (201) sind; und
Identifizieren einer oder mehrerer Bedieneraktionen, die für die vorherigen Vorkommnisse des mindestens einen anomalen Ereignisses durchgeführt wurden, um die Unterstützung zum Korrigieren des mindestens einen anomalen Ereignisses zu erzeugen.

9. Verfahren nach einem der vorhergehenden Ansprüche, ferner umfassend das Feinabstimmen der vortrainierten Regel-Engine (108) basierend auf Echtzeit-Bedieneraktionen, die an der mindestens einen Ausrüstung (102a.1, 102b.1) durchgeführt werden, um das mindestens eine anomale Ereignis zu korrigieren.

10. Vortrainierte Regel-Engine (108) zum Bereitstellen von Unterstützung zum Korrigieren mindestens eines anormalen Ereignisses, das für mindestens eine Ausrüstung (102a.1, 102b.1) in einer industriellen Umgebung festgestellt wird, wobei die vortrainierte Regel-Engine (108) Folgendes umfasst:
einen Prozessor (109); und
einen Speicher (111), der kommunikativ mit dem Prozessor (109) gekoppelt ist, wobei der Speicher (111) vom Prozessor ausführbare Anweisungen speichert, die, wenn sie ausgeführt werden, den Prozessor (109) dazu veranlassen, das Verfahren nach einem der Ansprüche 1 bis 9 durchzuführen.

## Revendications

1. Procédé de fourniture d'une assistance pour la correction d'au moins un événement anormal rencontré pour au moins un équipement (102a.1, 102b.1) dans un environnement industriel, le procédé comprenant les étapes suivantes :
recevoir, par un moteur de règles (108) pré-entraîné, des informations en temps réel relatives à au moins un équipement (102a.1, 102b.1), dans un environnement industriel, lors de l'identification d'au moins un événement anormal rencontré pour l'au moins un équipement (102a.1, 102b.1) ;
sélectionner, à l'aide du moteur de règles (108) pré-entraîné, au moins une donnée parmi des données historiques (201), des données d'opinion d'expert (202) et des données de normes d'équipement (203) associées à au moins un équipement (102a.1, 102b.1), sur la base d'informations d'état en temps réel, à partir des informations en temps réel, relatives à au moins un équipement (102a.1, 102b.1),
où la sélection de l'au moins une donnée à partir des données historiques (201), des données d'opinion d'expert (202) et des données de normes d'équipement (203) comprend les étapes suivantes :
identifier, par le moteur de règles pré-entraîné, un facteur de priorité relatif à au moins un événement anormal rencontré pour l'au moins un équipement (102a.1, 102b.1) sur la base des informations d'état en temps réel ; et
sélectionner, par le moteur de règles pré-entraîné, l'au moins une donnée parmi les données historiques (201), les données d'opinion d'expert (202) et les données de normes d'équipement (203) sur la base du facteur de priorité identifié ;
analyser, par le moteur de règles pré-entraîné (108), les informations temps réel reçues en utilisant l'au moins une donnée sélectionnée ;
générer, par le moteur de règles (108) pré-entraîné, une aide pour corriger l'au moins un événement anormal rencontré pour l'au moins un équipement (102a.1, 102b.1) sur la base de l'analyse ; et
fournir, par le moteur de règles (108) pré-entraîné, l'assistance à un opérateur (104a) pour corriger l'au moins un événement anormal rencontré pour l'au moins un équipement (102a.1, 102b.1).

2. Procédé selon la revendication 1, dans lequel les informations en temps réel indiquent au moins un état de fonctionnement courant de l'au moins un équipement (102a.1, 102b.1), une ou plusieurs catégories de sous-équipement associées audit à l'au moins un équipement (102a.1, 102b.1), des informations d'état en temps réel relatives à l'au moins un équipement (102a.1, 102b.1), une ou plusieurs conditions d'alarme, et un ou plusieurs états de fonctionnement de sous-équipement.

3. Procédé selon l'une quelconque des revendications précédentes, dans lequel le moteur de règles pré-entraîné (108) est entraîné au moyen de données historiques (201), de données d'opinion d'expert (202) et de données de normes d'équipement.

4. Procédé selon l'une quelconque des revendications précédentes, dans lequel les données historiques (201) comprennent une pluralité d'actions d'opérateur exécutées par un ou plusieurs opérateurs (104) pour corriger chacun d'un ou plusieurs événements anormaux précédemment survenus pour l'au moins un équipement (102a.1, 102b.1).

5. Procédé selon l'une quelconque des revendications précédentes, dans lequel les données d'opinion d'expert (202) comprennent une ou plusieurs opinions d'expert industriel associées à la correction de chacun d'un ou plusieurs événements anormaux rencontrés pour l'au moins un équipement (102a.1, 102b.1).

6. Procédé selon l'une quelconque des revendications précédentes, dans lequel les données de normes d'équipement (203) comprennent une spécification de données de fabricant d'équipement d'origine (OEM) reçue du fabricant de l'au moins un équipement (102a.1, 102b.1).

7. Procédé selon l'une quelconque des revendications précédentes, dans lequel l'assistance comprend au moins une assistance basée sur du texte, une assistance basée sur des valeurs comprenant des cadrans et des éléments graphiques, une assistance basée sur des graphes, une assistance basée sur des notifications, une assistance basée sur des courriels et une assistance basée sur des messages.

8. Procédé selon l'une quelconque des revendications précédentes, dans lequel l'analyse des informations temps réel reçues au moyen des données historiques (201) comprend les étapes suivantes :
vérifier que l'occurrence précédente de l'au moins un évènement anormal est supérieure à un nombre prédéfini d'occurrences dans les données historiques (201) ; et
identifier une ou plusieurs actions d'opérateur réalisées pour les occurrences précédentes de l'au moins un événement anormal, pour générer l'assistance à la correction de l'au moins un événement anormal.

9. Procédé selon l'une quelconque des revendications précédentes, comprenant en outre le réglage fin du moteur de règles pré-entraîné (108) sur la base d'actions d'opérateur en temps réel effectuées sur l'au moins un équipement (102a.1, 102b.1) pour corriger l'au moins un événement anormal.

10. Moteur de règles pré-entraîné (108) destiné à fournir une assistance pour corriger au moins un événement anormal rencontré pour au moins un équipement (102a.1, 102b.1) dans un environnement industriel, le moteur de règles pré-entraîné (108) comprenant :
un processeur (109) ; et
une mémoire (111) couplée de manière communicative au processeur (109), la mémoire (111) stockant des instructions exécutables par le processeur qui, lorsqu'elles sont exécutées, amènent le processeur (109) à exécuter le procédé selon l'une quelconque des revendications 1 à 9.
